Europäisches Patentamt

European Patent Office

Office européen des brevets

(11) Numéro de publication: **0176397**
**B1**

# FASCICULE DE BREVET EUROPEEN

(45) Date de publication du fascicule du brevet:
21.02.90

(51) Int. Cl.⁵: **G 02 B 7/18**

(21) Numéro de dépôt: **85401669.8**

(22) Date de dépôt: **21.08.85**

(54) Dispositif d'orientation pour un composant optique.

(30) Priorité: **30.08.84 FR 8413466**

(43) Date de publication de la demande:
**02.04.86 Bulletin 86/14**

(45) Mention de la délivrance du brevet:
**21.02.90 Bulletin 90/8**

(84) Etats contractants désignés:
**DE GB**

(56) Documents cités:
**US-A- 1 632 459**
**US-A- 3 596 863**
**US-A- 3 700 313**
**US-A- 3 814 365**
**US-A- 4 293 112**

(73) Titulaire: **SOCIETE PHOTONETICS, 52 Avenue de l'Europe, F-78160 Marly-Le-Roi (FR)**

(72) Inventeur: **Vial, Jean-Claude, 30, place des Géants, F-38100 Grenoble (FR)**
Inventeur: **Carminati, André, 20, rue Conrad Killian, F-38950 Saint-Martin le Vinoux (FR)**

(74) Mandataire: **Michelet, Alain et al, BUGNION ASSOCIES 55, rue Boissonade, F-75014 Paris (FR)**

ACTORUM AG

## Description

L'invention concerne un dispositif d'orientation pour un composant optique, comportant une base fixe, une première platine pour maintenir le composant optique, et un premier agencement d'articulation pour faire tourner la première platine par rapport à la base autour d'un premier axe, et la maintenir dans une orientation choisie par des moyens de butées ajustables s'opposant à l'action de rappel de moyens de rappel élastique.

Les dispositifs de ce genre connus sont conçus pour engendrer une rotation pure, exempte de translation. A cet effet ils utilisent des systèmes à bille (US-A-4 293 112), à ressort souple (US-A-3 596 863) ou à cardan dans lesquels les mêmes moyens ou des moyens coopérant étroitement assurent la rotation autour de différents axes. Ces dispositifs sont très coûteux et d'entretien difficile.

Le but de l'invention est d'obtenir un dispositif d'une grande souplesse d'emploi et dont la fabrication et l'entretien sont faciles et économiques.

Dans le dispositif selon l'invention, l'agencement d'articulation comprend:

— des moyens définissant une surface de révolution dont l'axe constitue l'axe de rotation relative de la base et de la première platine;

— des surfaces de contact appartenant à la base et à la première platine et coopérant avec ladite surface de révolution;

— les moyens de rappel élastique appliquant les surfaces de contact contre la surface de révolution et sollicitant la base et la première platine en rotation relative dans un sens.

D'autre caractéristiques de l'invention ressortiront de la description détaillée donnée ci-après et des dessins annexés, les éléments et sous-ensembles des dispositifs décrits et représentés faisant partie de l'invention. Dans les dessins:

— la figure 1 est une vue en élévation d'une premier dispositif d'orientation selon l'invention, dans sa position de départ fermée;

— la figure 2 est vue de côté du dispositif de la figure 1;

— la figure 3 est une vue en coupe, selon la ligne III-III de la figure 2, du dispositif dans une position ouverte selon un de ses axes d'articulation;

— la figure 4 est une représentation très schématique en perspective du dispositif dans une position ouverte;

— la figure 5 est une vue en élévation d'un second dispositif d'orientation selon l'invention, dans sa position de départ fermée;

— la figure 6 est une vue du même dispositif selon la flèche F de la figure 5.

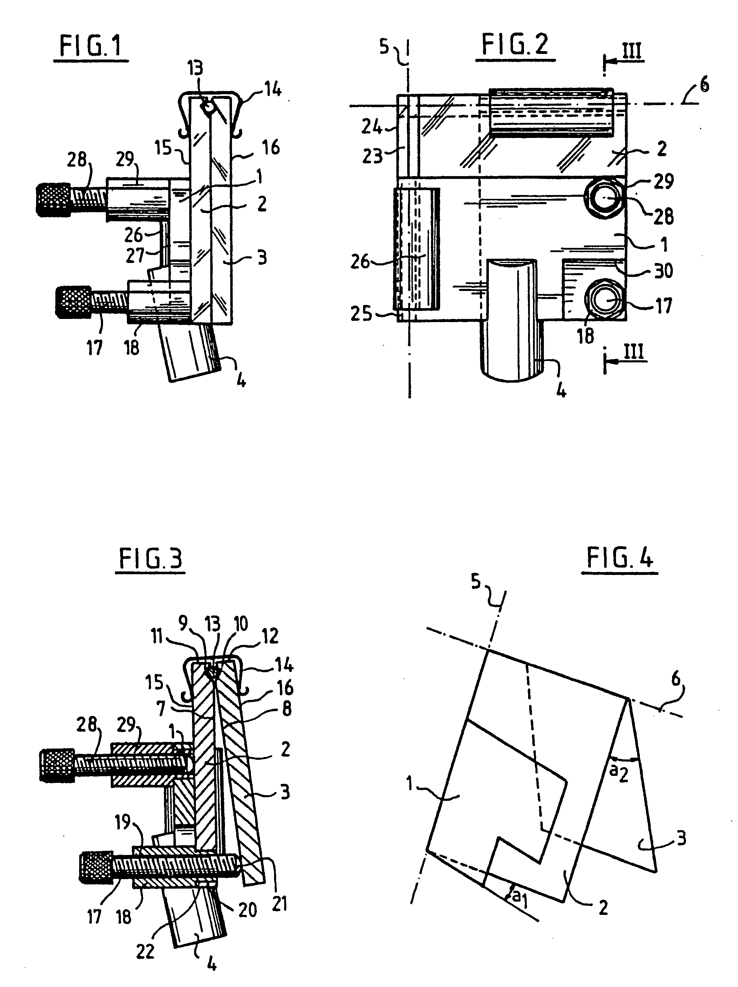

Le dispositif représenté dans les figures 1 et 2 comprend une base 1, une première platine 2 et une seconde platine 3 ayant sensiblement la forme de plaques planes rectangulaires. Un manchon cylindrique 4 présentant un trou axial fileté est collé ou soudé à la base 1 de façon que son axe fasse un angle de quelques degrés avec le plan de la base.

Le manchon 4 est destiné à être vissé sur une tige filetée verticale appartenant à un pied, de telle sorte que la base 1 occupe une position fixe dans l'espace, légèrement inclinée par rapport à la verticale, et le support 3 est destiné à recevoir un composant optique dont l'orientation doit être ajustée.

A cet effet, le dispositif comprend un premier agencement pour faire tourner la platine intermédiaire 2 par rapport à la base 1 autour d'une axe 5, et un second agencement pour faire tourner le support 3 par rapport à la platine intermédiaire 2 autour d'une axe 6, les axes 5 et 6 ayant des directions différentes, et plus particulièrement perpendiculaires l'une à l'autre.

Dans la position de départ fermée corrspondant aux figures 1 et 2, les plaques 1, 2 et 3 sont orientées selon une même direction de plan et sont sensiblement adjacentes deux à deux.

La structure et la fonctionnement du second agencement d'orientation ressortent plus particulièrement de la figure 3. Les faces en regard 7 et 8 des plaques 2 et 3 présentent respectivement deux rainures 9 et 10 à section transversale en V, s'étendant l'une en face de l'autre le long de bords adjacents 11 et 12 des deux plaques. Une tige cylindrique 13 s'engage dans les rainures 9 et 10 et forme avec elles des moyens d'articulation ou de guidage en rotation des éléments 2 et 3, la coopération des surfaces planes des rainures avec la surface cylindrique du révolution de la tige définissant un mouvement relatif des deux éléments autour de l'axe de la tige qui constitue l'axe 6.

Le second agencement comprend également une pince élastique en forme de cavalier 14 qui chevauche les moyens de guidage et les bords 11 et 12 des plaques 2 et 3 et s'appuie sur les faces 15 et 16 de celles-ci opposées aux faces 7 et 8 respectivement. La pince 14 peut être du type de celles vendues sous la dénomination Aclé et destinées en particulier à réaliser des montages sous verre de photographies par exemple. La pince 14 constitue un moyen de rappel élastique qui tend à faire tourner les plaques 2 et 3 dans le sens du rapprochement des faces 7 et 8, c'est-à-dire du retour vers la position des figures 1 et 2. Elle tend également à appliquer les surfaces des rainures 9 et 10 contre celle de la tige 13.

Le second agencement comprend encore des moyes de butée ajustables pour augmenter l'angle des plaques 2 et 3 et maintenir celui-ci à une valeur non nulle contre l'action de la pince 14. Ces moyens comprennent une vis 17 coopérant avec un corps 18 muni d'un trou fileté 19, le corps 18 faisant saillie par rapport à la face 15 de la platine 2 et étant constitué par une douille solidarisée à cette platine par vissage dans un trou fileté 20 de cette dernière. La face 8 de la plaque support 3 s'appuie sur l'extrémité bombée 21 de la vis 17.

Les moyens de butée ajustables sont montés à distance de l'axe d'articulation, à proximité du bord 22 opposé au bord 11 de la plaque 2. Les zones d'appui de la pince 14 sur les plaques 2 et 3 sont plus proches des moyens d'articulation que les moyens de butée ajustables ce qui permet à la pince 14 d'assurer à la fois le contact entre les surfaces des rainures 9 et 10 et la surface de la tige 13 et le contact de la face 8 de la plaque 3 avec l'extrémité 21 de la vis 17.

Le premier agencement prévu pour faire tourner la platine 2 par rapport à la base 1 est tout à fait semblable au second agencement qui vient d'être décrit. Il comprend une rainure 23 ménagée dans la face 15 de la platine 2 et s'étendant le long d'un bord 24 de celle-ci, une rainure conjuguée ménagée dans la face en regard de la plaque de base 1, et une tige cylindrique 25 coopérant avec les surfaces des rainures. Une pince élastique 26 chevauche la tige 25 et les bords des plaques 1 et 2 et s'appuie sur la face 7 de la plaque 2 et sur la face 27, opposée à la plaque 2, de la plaque de base 1. Une vis 28, en se vissant dans une douille filetée 29 faisant saillie sur la face 27 de la plaque 1, permet d'écarter l'une de l'autre les plaques 1 et 2. La douille 29 est fixée à la plaque 1 au voisinage du bord de celle-ci opposé à celui le long duquel est ménagée la rainure.

La plaque de base 1 présente une découpe 30 permettant le passage de la vis 17 et de la douille 18.

La figure 4 représente de façon très schématique la configuration du dispositif lorsque la plaque 2 forme avec les plaques 1 et 3 respectivement des angles a1 et a2 non nuls. En faisant varier les angles a1 et a2 au moyen des premier et second agencements d'orientation, on peut orienter la plaque support 3 de façon que, par exemple, un rayon lumineux dévié par un composant optique monté sur cette plaque support prenne n'importe quelle direction souhaitée dans un angle solide entourant la position du rayon dévié correspondant à une position moyenne du dispositif, définie par des valeurs intermédiaires des angles a1 et a2. L'inclinaison du manchon 4 par rapport à la plaque de base 1 permet, lorsque le manchon est vertical, de déplacer la plaque 3, en faisant varier l'angle a2, de part et d'autre d'une position verticale, la position moyenne du rayon dévié pouvant alors être horizontale.

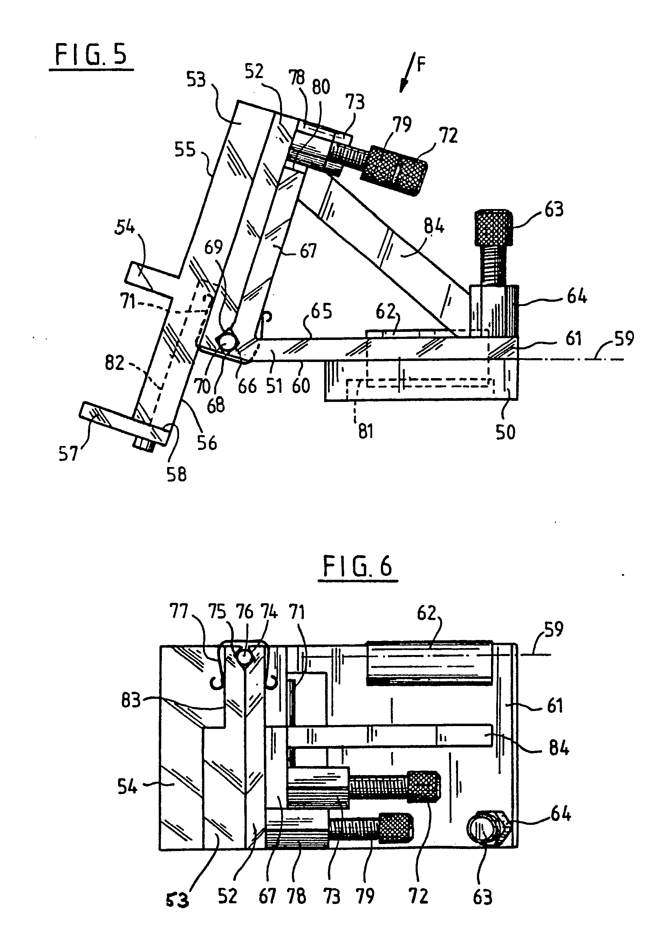

Le dispositif d'orientation à trois axes représenté dans les figures 5 et 6 comprend une plaque de base 50 destinée à être fixée horizontalement sur un banc d'optique, une première platine intermédiaire 51 en forme d'équerre, une seconde platine intermédiaire 52 ayant la forme générale d'une plaque plane et un support 53 destiné à recevoir un réseau de diffraction disposé entre une nervure 54 faisant saillie par rapport à une face plane 55 du support 53 opposée à une face 56 située en regard de la platine 52, et une plaquette 57 rapportée sur un bord 58 du support 53 et s'étendant parallèlement à la nervure 54.

Les éléments constitués par la base 50, les platines 51 et 52 et le support 53 peuvent être orientés les uns par rapport aux autres grâce à trois agencements d'orientation semblables à ceux décrits en relation avec les figures 1 à 3.

Un premier agencement propre à faire tourner la première platine intermédiaire 51 par rapport à la base 50 autour d'une axe 59 comprend une tige cylindrique de révolution autour de l'axe 59, une rainure en V ménagée dans la face supérieure de la base 50 et une rainure ménagée dans la face externe 60, en regard de la base 50, d'une aile 61 de l'équerre 51. Une pince élastique 62 chevauche l'axe 59 et les bords adjacents de la base 50 et de l'aile 61. Des moyens de butée comprennent une vis 63 vissée dans une douille 64 faisant saillie sur la face interne 65 de l'aile 61.

Un second agencement propre à faire tourner la seconde platine intermédiaire 52 par rapport à la première platine intermédiaire 51 comprend une rainure 66 ménagée dans la face externe de la seconde aile 67 de l'équerre constituant la première platine intermédiaire 51, et s'étendant le long de l'arête 68 de l'équerre, qui est la ligne de jonction des faces externes des deux ailes. La rainure 66 et une rainure conjuguée 69 lui faisant face dans la seconde platine 52 coopèrent avec une tige cylindrique de révolution 70 dont l'axe constitue l'axe de rotation relative des deux platines intermédiaires, cet axe étant parallèle à l'arête 68 et perpendiculaire à l'axe 59 de la première rotation.

Une pince élastique 71 chevauche les rainures 66 et 69, la tige 70 et les bords adjacents de l'aile 67 et de la plaque 52 et s'appuie sur les faces opposées de celles-ci pour les solliciter l'une vers l'autre. Les moyens de butée ajustables comprennent une vis 72 et une douille filetée rapportée 73 faisant saillie sur la face interne de l'aile 67 près du bord de celle-ci opposé à l'arête 68.

Dans l'agencement destiné à faire tourner le support 53 par rapport à la seconde platine intermédiaire 52, la rainure de la plaque 52, celle du support 53, la tige cylindrique et la pince élastique sont désignées respectivement par les références 74, 75, 76 et 77. L'axe de la tige 76, c'est-à-dire l'axe de rotation, est situé sensiblement dans le plan perpendiculaire à l'axe de la tige 70 et contenant l'axe 59. La douille 78 recevant la vis 79 pour le réglage de l'orientation relative des éléments 52 et 53 est fixée sur la plaque 52.

Un évidement 80 est prévu dans l'aile 67 de la platine 51 pour le passage de la douille 78 et de la vis 79. Un évidement 81 est par ailleurs prévu dans la base 50 et deux évidements 82 et 83 dans le support 53 pour loger partiellement respectivement les pinces 62, 71 et 77.

Les ailes 61 et 67 de l'équerre sont reliées par une traverse de renforcement 84. Elles forment entre elles un angle légèrement inférieur à un droit de façon à permettre l'oscillation du support 53 de part et d'autre d'une position verticale.

Dans le dispositif selon l'invention, les agencements d'orientation sont commandés indépendamment les uns des autres par la rotation des vis, ce qui permet de faire varier individuellement chacun des angles entre deux des éléments constitués par la base, le support et la ou les platines intermédiaires. Ces agencements sont entièrement distincts les uns des autres et définissant chacun un mouvement de rotation simple.

De plus, cette conception fait appel à des moyens mécaniques très simples, donc économiques et faibles, d'un emploi et d'un entretien faciles.

Il suffit, pour séparer deux éléments articulés entre eux, de retirer la pince élastique qui les réunit. Ceci permet en particulier de remplacer très facilement l'un des éléments articulés, par exemple la base pour adapter le dispositif à une installation différente, ou le support du composant optique pour l'adapter au composant à supporter. Il est également souvent plus simple de remplacer un support portant un composant optique par un support semblable portant un autre composant que de démonter et remonter les composants sur le même support. Cette interchangeabilité des éléments n'existe pas avec les dispositifs connus, dans lesquels les moyens d'orientation
multiaxes rendent les éléments pratiquement inséparables.

Outre les avantages qui viennent d'être signalés, le
dispositif selon l'invention se distingue par des courses angulaires très grandes, pouvant atteindre 30°
et même plus, et par des épaisseurs à traverser faibles, de l'ordre de 10 mm, permettant d'obtenir facilement des ouvertures optiques importantes avec
des composants semi-transparents.

L'invention propose des éléments interchangeables pouvant être assemblés pour réaliser des dispositifs d'orientation tels que décrits ci-dessus.

Un tel élément comprend par exemple une plaque
sur les deux faces de laquelle des rainures respectives s'étendent dans des directions différentes. Un
corps présentant un trou fileté peut faire saillie sur
l'une des faces de la plaque.

Un autre élément selon l'invention est une platine
ayant la forme générale d'une équerre dont les deux
ailes en forme de plaque présentent sur leurs faces
externes deux rainures respectivement, l'une de ces
rainures s'étendant le long de l'arête de l'équerre.
Les ailes de l'équerre forment, de préférence, un
angle peu inférieur à un droit, et peuvent être munies respectivement de deux corps présentant des
trous filetés et faisant saillie sur leurs faces internes. Ces corps filetés sont, de préférence, situés au
voisinage des bords des ailes opposés à l'arête de
l'équerre.

Dans les deux types d'éléments qui viennent
d'être définis, les deux rainures s'étendant de préférence perpendiculairement l'une à l'autre.

Une platine en équerre est particulièrement utile
dans un dispositif d'orientation à trois axes tel que
décrit en relation avec les figures 5 et 6. Elle est également intéressante dans un dispositif à deux axes
utilisé pour orienter un miroir semi-transparent. Elle
permet alors au faisceau lumineux traversant le
miroir appliqué contre la plaque support de traverser
seulement deux plaques du dispositif, à savoir la plaque support et l'une des ailes de la platine en équerre,
au lieu de traverser les trois plaques 1, 2 et 3 si on utilisait le dispositif des figures 1 et 2. On obtient ainsi
une ouverture angulaire du faisceau plus grande pour
des dimensions d'ouvertures de passage données
dans les plaques.

Dans les dispositifs décrits, les moyens de guidage
en rotation permettent une translation relative des
éléments selon l'axe des tiges. Cette latitude permet
de positionner comme on le désire le centre optique
du composant à orienter. Au cas où une telle possibilité de translation serait gênante, il serait facile de la
supprimer par tout moyen de butée axiale connu
dans la technique.

Par ailleurs, un angle peu inférieur à un droit tel
que décrit pour une platine en forme d'équerre est
avantageux lorsque la surface optique à orienter est
parallèle au support sur lequel le composant possédant cette surface est monté. Dans le cas contraire,
par exemple si le composant est un prisme, cette
relation n'existe plus et l'angle de l'équerre peut
être égal, supérieur ou encore très inférieur à un
droit.

## Revendications

1. Dispositif d'orientation pour un composant
optique, comportant une base fixe (1, 50) une première platine (2, 51) pour maintenir le composant
optique, et un premier agencement d'articulation
pour faire tourner la première platine (2, 51) par rapport à la base (1, 50) autour d'un premier axe (5, 59)
et la maintenir dans une orientation choisie par des
moyens de butée ajustables (28, 29; 63, 64) s'opposant à l'action de rappel de moyens de rappel élastique (26, 62), caractérisé en ce ledit agencement
comprend
— des moyens (25) définissant une surface de
révolution dont l'axe (5, 59) constitue un axe de rotation relative de la base (1, 50) et de la première platine (2, 51);
— des surfaces de contact appartenant à la base
(1, 50) et à la première platine (2, 51) et coopérant
avec ladite surface de révolution;
— les moyens de rappel élastique (26, 62) appliquant les surfaces de contact contre la surface de
révolution et sollicitant la base (1, 50) et la première
platine (2, 51) en rotation relative dans un sens.

2. Dispositif selon la revendication 1, caractérisé
en ce que lesdites surfaces de contact appartiennent
à des rainures (23) ménagées dans des faces planes
respectives de la base (1, 50) et de la première platine
(2, 51) et s'étendant dans la direction de l'axe de
rotation (5, 59).

3. Dispositif selon la revendication 2, caractérisé
en ce que lesdites rainures (23) ont une section transversale en V.

4. Dispositif selon l'une des revendications précédentes, caractérisé en ce que lesdits moyens (25)
définissant une surface de révolution sont constitués
par une tige cylindrique.

5. Dispositif selon l'une des revendications précédentes, caractérisé en ce que la base (1, 50) et la première platine (2, 51) comprennent chacune au moins
une plaque sensiblement plane.

6. Dispositif selon la revendication 5, caractérisé
en ce que ledit axe (5, 59) s'étend le long d'une bord
d'une première plaque de la base (1, 50) et le long
d'un bord d'une seconde plaque de la première platine (2, 51).

7. Dispositif selon la revendication 6, caractérisé
en ce que lesdits moyens de butée (28, 29; 63, 64)
sont éloignés desdits bords.

8. Dispositif selon la revendication 7, caractérisé
en ce que lesdits moyens de rappel élastique (26, 62)
sont constitués par une pince en forme de cavalier
qui chevauche ledit axe (5, 59) et lesdits bords des
plaques et s'appuie sur les faces (27, 7, 65) de celles-
ci opposées à celles (15, 60) portant les surfaces de
contact, en des zones plus proches desdits bords que
les moyens de butée (28, 29; 63, 64).

9. Dispositif selon l'une des revendications 5 à 8,
caractérisé en ce que les moyens de butée comprennent une vis (28, 63) traversant la première desdits
plaques et coopérant avec un trou fileté solidaire de
celle-ci, et dont une extrémité est propre à s'appuyer
contre une face (15, 60) de la seconde desdites plaques.

10. Dispositif selon la revendication 9, caractérisé en ce que le trou fileté est ménagé dans un corps (29) faisant saillie sur la face (27) de la première plaque opposée à la seconde plaque.

11. Dispositif selon la revendication 10, caractérisé en ce que ledit corps (29) est une douille fixée à la première plaque.

12. Dispositif selon l'une des revendications précédentes, caractérisé en ce que la première platine (2, 51) peut recevoir le composant optique par l'intermédiaire d'une seconde platine (3, 52) pouvant tourner par rapport à la première platine (2, 51) autour d'une second axe (6) ayant une direction différente de celle du premier axe (5) et être maintenue dans une orientation choisie, grâce à un second agencement d'articulation (9, 10, 13, 14, 17, 18) semblable au premier et pouvant être commandé indépendamment de celui-ci.

13. Dispositif selon la revendication 12, caractérisé en ce que la seconde platine (3, 52) peut recevoir le composant optique par l'intermédiaire d'une troisième platine (53) pouvant tourner par rapport à la seconde platine autour d'un troisième axe ayant une direction différente de celle du second axe et être maintenue dans une orientation choisie, grâce à un troisième agencement d'articulation (74 - 79) semblable aux deux premiers et pouvant être commandé indépendamment de ceux-ci.

14. Dispositif selon la revendication 13, caractérisé en ce que les second et troisième axes sont perpendiculaires.

15. Dispositif selon l'une des revendications 12 à 14, caractérisé en ce que les premier et second axes sont perpendiculaires.

16. Dispositif selon l'une des revendications 12 à 15, caractérisé en ce qu'au moins une platine (2) a la forme générale d'une plaque présentant deux faces planes opposées (15, 7) dans lesquelles sont ménagées respectivement deux rainures de guidage (23, 9) appartenant respectivement à deux desdits agencements.

17. Dispositif selon l'une des revendications 12 à 16, caractérisé en ce qu'au moins une platine a la forme générale d'une équerre (51) dont les deux ailes (61, 67) en forme de plaque présentent sur leur face externe deux rainures respectivement appartenant à deux desdits agencements, l'une (66) desdites rainures s'étendant le long de l'arête (68) l'équerre (51).

18. Dispositif selon la revendication 17, caractérisé en ce que les ailes (61, 67) de l'équerre (51) forment un angle peu inférieur à un droit.

19. Utilisation d'une platine (2, 3, 51, 52, 53) comprenant une plaque et présentant sur les deux faces (15, 7) de la plaque respectivement deux rainures (23, 9) s'étendant dans des directions différentes, dans un dispositif selon l'une des revendications précédentes.

20. Utilisation d'une platine (2, 3, 51, 52, 53) en forme générale d'équerre dont les deux ailes (61, 67) en forme de plaque présentent sur leur face externe deux rainures, l'une (66) desdites rainures s'étendant le long de l'arête (68) de l'équerre (51) dans un dispositif selon l'une des revendications 1 - 18.

## Patentansprüche

1. Vorrichtung zur Ausrichtung eines optischen Bauteils, bestehend aus einem feststehenden Sockel (1, 50), einer ersten Platine (2, 51) zur Befestigung der optischen Vorrichtung sowie einer ersten Gelenkvorrichtung zur Drehung der ersten Platine (2, 51) gegenüber den Sockel (1, 50) um eine erste Achse (5, 59) und deren Festhalten in der gewünschten Stellung einstellbare Anschläge (28, 29; 63, 64) besitzt, die der Kraft der elastischen Rückholvorrichtung (26, 62) entgegenwirken, dadurch gekennzeichnet daß die Gelenkvorrichtung
— Mittel (25) besitzt, die eine Drehfläche bestimment, deren Achse (5, 59) eine Rotationsachse gegenüber dem Sockel (1, 50) und der ersten Platine (2, 51) bildet,
— Kontaktflächen aufweist, die zum Sockel (1, 50) und zur ersten Platine (2, 51) gehören und mit der o.a. Drehfläche zusammenarbeiten,
— elastische Rückholvorrichtungen (26, 62) besitzt, welche die Kontaktflächen gegen die Drehfläche drücken und den Sockel (1, 50) und die erste Platine (2, 51) bei Rotation in einer Drehrichtung belasten,

2. Vorrichtung nach Patentanspruch 1, dadurch gekennzeichnet, daß die o.a. Kontaktflächen Rillen (23) zugeordnet sind, die in die entsprechenden Flächen des Sockels (1, 50) und der ersten Platine (2, 51) eingearbeitet sind und in Richtung der Rotationsachse (5, 59) verlaufen.

3. Vorrichtung nach Patentanspruch 2, dadurch gekennzeichnet, daß die o.a. Rillen (23) einen V-förmigen Querschnitt aufweisen.

4. Vorrichtung nach einem beliebigen der o.a. Patentansprüche, dadurch gekennzeichnet, daß die o.a. Mittel (25) zur Bestimmung der Drehfläche aus einem zylindrischen Stab bestehen.

5. Vorrichtung nach einem beliebigen der o.a. Patentansprüche, dadurch gekennzeichnet, daß der Sockel (1, 50) und die erste Platine (2, 51) jeweils mindestens eine weitgehend flache Platte besitzen.

6. Vorrichtung nach Patentanspruch 5, dadurch gekennzeichnet, daß die o.a. Achse (5, 59) dem Rand einer ersten Platte des Sockels (1, 50) und dem Rand einer zweiten Platte der ersten Platine (2, 51) entlang verläuft.

7. Vorrichtung nach Patentanspruch 6, dadurch gekennzeichnet, daß die o.a. Anschläge (28, 29; 63, 64) von den o.a. Rändern entfernt sind.

8. Vorrichtung nach Patentanspruch 7, dadurch gekennzeichnet, daß die o.a. elastischen Rückholvorrichtungen (26, 62) aus einer Klemme in Form eines Reiters bestehend, der auf der o.a. Achse (5, 59) und den o.a. Rändern der Platten angebracht ist und auf deren Kontaktflächen (27, 7, 65) gegenüber denen (15, 60) aufliegt, die die o.a. Kontaktflächen in den Bereichen tragen, die den Anschlägen (28, 29; 63, 64) am nächsten liegen.

9. Vorrichtung nach einem beliebigend der Patentansprüche 5 bis 8, dadurch gekennzeichnet, daß die Anschläge über eine Schraube (28, 63) verfügen, die durch die erste der o.a. Platten durchgeführt ist und in eine mit diesen fest verbundene Gewindebohrung geschraubt ist und deren eines Ende gegen eine Fläche (15, 60) der zweiten der o.a. Platten anstoßen kann.

10. Vorrichtung nach Patentanspruch 9, dadurch gekennzeichnet, daß die o.a. Gewindebohrung in einem Körper (29) angebracht ist der aus der Oberfläche (27) der o.a. ersten Platte gegenüber der zweiten Platte herausragt.

11. Vorrichtung nach Patentanspruch 10, dadurch gekennzeichnet, daß der o.a. Körper (29) aus einer fest mit der ersten Platte verbundenen Hülse besteht.

12. Vorrichtung nach einem beliebigen der vorstehenden Patentansprüche, dadurch gekennzeichnet, daß die erste Platine (2, 51) das optische Bauteil über eine zweite Platine (3, 52) aufnehmen kann, die gegenüber der ersten Platine (2, 51) um eine zweite Achse (6) drehbar ist, deren Ausrichtung sich von der der ersten Achse (5) unterscheidet, sowie mit Hilfe einer zweiten, der ersteren ähnlichen Gelenkvorrichtung (9, 10, 13, 14, 17, 18) gegenüber dieser ersteren verändert und in der gewünschten Position beibehalten werden kann.

13. Vorrichtung nach Patentanspruch 12, dadurch gekennzeichnet, daß die zweite Platine (3, 52) das optische Bauteil über eine dritte Platine (53) aufnehmen kann, die sich gegenüber der zweiten Platine um eine 3. Achse drehen kann, deren Ausrichtung sich von der der zweiten Achse unterscheidet sowie mit Hilfe einer 3., den beiden ersteren ähnlichen Gelenkvorrichtung (74 - 79) verändert und unabhängig von dieser in der gewünschten Position beibehalten werden kann.

14. Vorrichtung nach Patentanspruch 13, dadurch gekennzeichnet, daß die 2. und 3. Achse senkrecht zueinander stehen.

15. Vorrichtung nach einem der Patentansprüche 12 - 14, dadurch gekennzeichnet, daß die 1. und 2. Achse senkrecht zueinander stehen.

16. Vorrichtung nach einem der Patentansprüche 12 - 15, dadurch gekennzeichnet, daß mindestens eine Platine (2) die allgemeine Form einer Platte aufweist, die zwei gegenüberliegende Flächen (15, 7) besitzt, in denen jeweils zwei Führungsrillen (23, 9) eingelassen sind, die jeweils einer der beiden Gelenkvorrichtungen zugeordnet sind.

17. Vorrichtung nach einem der Patentansprüche 12 - 16, dadurch gekennzeichnet, daß mindestens eine Platine die Form eines rechten Winkels (51) aufweist, dessen beide plattenförmige Schenkel (61, 67) auf ihrer Außenseite je zwei Rillen besitzen, die den o.a. Gelenkvorrichtungen zugeordnet sind, wobei eine der Rillen (66) entlang der kante (68) des Winkels (51) verläuft.

18. Vorrichtung nach Patentanspruch 17, dadurch gekennzeichnet, daß die Schenkel (61, 67) einen nicht vollständigen rechten Winkel (51) bilden.

19. Verwendung einer Platine (2, 3, 51, 52, 53) in einer Vorrichtung nach einem beliebigen der vorstehenden Patentansprüche, die aus einer Platte besteht, auf deren beiden Seiten je zwei Rillen (23, 9) eingelassen sind, die in unterschiedliche Richtung verlaufen.

20. Vorrichtung einer Platine (2, 3, 13, 51, 52, 53) mit der allgemeinen Form eines rechten Winkels in einer Vorrichtung nach einem beliebigen der Patentanspüche 1 - 18, deren beide plattenförmige Schenkel (61, 67) auf der Außenseite zwei Rillen aufweisen, von denen eine (66) entlang der Kante (68) des Winkels (51) verläuft.

## Claims

1. Orientation device for an optical component, comprising a base (1, 50), a first platen (2, 51) for holding the component in position and a first articulation assembly for causing the first plate (2, 51) to rotate with respect to the base (1, 50) about a first axis (5, 59) and holding it in a chosen orientation by adjustable stop means (28, 29; 63 64) opposing the return action of resilient return means (26, 62), characterized in that said assembly comprises

— means (25) defining a surface of revolution whose axis (5, 59) forms an axis of relative rotation of the base (1, 50) and of the first platen (2, 51),

— contact surfaces belonging to the base (1, 50) and to the first platen (2, 51) and cooperating with said surface of revolution,

— the resilient return means (26, 62), applying the contact surfaces against the surface of revolution and urging the base (1, 50) and the first platen (2, 51) in relative rotation in one direction.

2. Device according to claim 1, characterized in that said contact surfaces belong to grooves (23) formed in respective flat faces of the base (1, 50) and of the first platen (2, 51) and extending in the axis of rotation.

3. Device according to claim 2, characterized in that said grooves (23) have a V shaped cross section.

4. Device according to one of the preceding claims, characterized in that said means (25) defining a surface of revolution are formed by a cylindrical rod.

5. Device according to one of the preceding claims, characterized in that in that the base (1, 50) and the first platen (2, 51) each comprise at least one substantially flate plate.

6. Device according to claim 5, characterized in that said axis (5, 59) extends along an edge of a first plate of the base (1, 50) and along an edge of a second plate of the first platen (2, 51).

7. Device according to claim 6, characterized in that said stop means (28, 29; 63, 64) are spaced away from said edges.

8. Device according to claim 7, characterized in that said resilient return means (26, 62) are formed by a clip in the form of a staple which straddles said axes (5, 59) and said edges of the plates and bears on the faces (27, 71, 65) thereof opposite those (15, 60) bearing the contact surfaces, in zones closer to said edges than the stop means (28, 29; 63, 64).

9. Device according to one of claims 5 to 8, characterized in that the stop means comprise a screw (28, 63) passing through the first of said plates and cooperating with a tapped hole integral therewith and one end of which is adapted to bear against a face (15, 60) of the second of said plates.

10. Device according to claim 9, characterized in that a tapped hole is formed in a body (29) projecting from the face (27) of the first plate opposite the second plate.

11. Device according to claim 10, characterized in that said body (29) is a socket fixed to the first plate.

12. Device according to one of the preceding claims, characterized in that the first platen (2, 51) may receive the component via a second platen (3, 52) able to rotate with respect to the first platen (2, 51) about a second axis (6) having a direction different from that of the first axis (5) and be held in a chosen orientation, through a second articulation assembly (9, 10, 13, 14, 17, 18) similar to the first and controllable independently thereof.

13. Device according to claim 12, characterized in that the second platen (3, 52) may receive the component via a third platen (53) which may rotate with respect to the second platen about a third axis having a direction different from that of the second axis and be held in a chosen orientation, through a third articulation assembly (74 - 79) similar to the first two and controllable independently thereof.

14. Device according to claim 13, characterized in that the second and third axes are perpendicular.

15. Device according to one of claims 12 to 14, characterized in that the first and second axes are perpendicular.

16. Device according to one of claims 12 to 15, characterized in that at least one platen (2) has the general shape of a plate with two flat opposite faces (15, 7) in which are formed respectively two guide grooves (23, 9) belonging respectively to said to assemblies.

17. Device according to one of claims 12 to 16, characterized in that at least one platen has the general shape of a bracket (51) whose two flanges (61, 67) in the form of a plate have on their external face two grooves belonging respectively to said two assemblies, one (66) of said grooves extending along the sharp edge (68) of the bracket (51).

18. Device according to claim 17, characterized in that the flanges (61, 67) of the bracket (51) form an angle a little less than a right angle.

19. Use of a platen (2, 3, 51, 52, 53) comprising a plate and having on the two faces (15, 7) of the plate respectively two grooves (23, 9) extending in different directions, in a device according to one of the preceding claims.

20. Use of the platen (2, 3, 51, 52, 53) in the general form of a bracket whose two flanges (61, 67) in the form of a plate have on their external face two grooves, one (66) of said grooves extending along the sharp edges (68) of the bracket (51), in a device according to one of claims 1 to 18.

FIG.1

FIG.2

FIG.3

FIG.4

## FIG. 5

## FIG. 6